# EUROPÄISCHE PATENTSCHRIFT

(11) **EP 1 311 890 B1**
(45) Veröffentlichungstag und Bekanntmachung des Hinweises auf die Patenterteilung: **29.12.2004**
(21) Anmeldenummer: 01962671.2
(22) Anmeldetag: 22.08.2001
(51) Int. Cl.: G02B 6/34

(54) **OPTO-ELEKTRONISCHE BAUGRUPPE ZUM MULTIPLEXEN UND/ODER DEMULTIPLEXEN OPTISCHER SIGNALE**
OPTOELECTRONIC ASSEMBLY FOR MULTIPLEXING AND/OR DEMULTIPLEXING OPTICAL SIGNALS
BLOC OPTO-ELECTRONIQUE DESTINE A MULTIPLEXER ET / OU A DEMULTIPLEXER DES SIGNAUX OPTIQUES

(30) Priorität: 23.08.2000 DE 10043324
(43) Veröffentlichungstag der Anmeldung: 21.05.2003
(73) Patentinhaber: Infineon Technologies AG, 81669 München (DE)
(72) Erfinder: KROPP, Joerg-Reinhardt, 12355 Berlin (DE)
(74) Vertreter: Müller, Wolfram Hubertus, Dipl.-Phys.
(86) Internationale Anmeldenummer: PCT/DE2001/003234
(87) Internationale Veröffentlichungsnummer: WO 2002/016987

(56) Entgegenhaltungen:
- EP-A- 1 004 907
- FR-A- 2 539 518
- US-A- 4 244 045
- US-A- 5 835 517
- PATENT ABSTRACTS OF JAPAN vol. 004, no. 055 (P-008), 24. April 1980 (1980-04-24) & JP 55 025045 A (NIPPON TELEGR & TELEPH CORP), 22. Februar 1980 (1980-02-22)

## Beschreibung

Die Erfindung betrifft eine opto-elektronische Baugruppe zum Multiplexen und/oder Demultiplexen optischer Signale nach dem Oberbegriff des Anspruchs 1.

Es ist in der optischen Nachrichtentechnik bekannt, zur Übertragung einer möglichst großen Datenmenge über einen Lichtwellenleiter die zu übertragenden Daten zu multiplexen. Eine Möglichkeit hierzu besteht darin, mit mehreren Wellenlängen unabhängig und gleichzeitig über einen Wellenleiter Informationen zu übertragen. Dabei ist es notwendig, auf der Sendeseite die Signale der verschiedenen Lichtquellen durch einen optischen Multiplexer in einen Lichtwellenleiter zu vereinigen und auf der Empfängerseite die Signale verschiedener Wellenlängen aus dem ankommenden Wellenleiter durch einen optischen Demultiplexer in einzelne Kanäle zur getrennten Detektion aufzuteilen.

Zur Realisierung eines Multiplexing oder Demultiplexing ist es aus der EP-A-0 877 264 bekannt, die einzelnen Wellenlängen durch Interferenzfilter zu separieren. Durch eine hohe Anzahl von Interferenzschichten erzeugen die Interferenzfilter sehr steile spektrale Flanken zwischen Transmission und Reflektion verschiedener Wellenlängen. Nur eine bestimmte Wellenlänge wird dabei durch die Interferenzfilter durchgelassen, während die anderen Wellenlängen reflektiert werden. Durch eine Kaskadierung von solchen Filtern mit individuell unterschiedlichen spektralen Tansmissionslagen kann eine Selektion bzw. Vereinigung einer Vielzahl von Wellenlängenkanälen erfolgen. Die Verwendung von Interferenzfiltern ist insbesondere bei größeren Wellenlängenabständen von 10 nm mehr zwischen den einzelnen Kanälen äußerst effektiv.

Zur Ein- und Auskopplung von Lichtsignalen in eine Baugruppe zum Multiplexen bzw. Demultiplexen optischer Signale sind optische Abbildungssysteme erforderlich, die Lichtstrahlen eines optischen Kanals mit mehreren Wellenlängen oder Lichtstrahlen einer Mehrzahl optischer Kanäle mit jeweils nur einer Wellenlänge in einen Multiplexkörper ein- und auskoppeln.

EP-A-1 004 907 offenbart eine Baugruppe Multiplexen bzw. Demultiplexen mit Interferenzfiltern an einem Multiplex körper. Die Ein- bzw. Auskopplung optischer Signale erfolgt über Schnittstellenkörper, welche in den Multiplexkörper integriert bzw. unmittelbar mit diesem verbunden sind. Ferner umfasst die Baugruppe Opto-elektronische Bauelement zum Nachweis der Lichtstrahlen unterschiedlicher Wellen längen.

Der Erfindung liegt die Aufgabe zugrunde, eine opto-elektronische Baugruppe zum Multiplexen und/oder Demultiplexen optischer Signale zur Verfügung zu stellen, die eine kompakte, platzsparende und stabile Anordnung der optischen Abbildungssysteme für einen Multiplexkörper zur Verfügung stellt.

Diese Aufgabe wird erfindungsgemäß durch eine opto-elektronische Baugruppe mit den Merkmalen des Anspruchs 1 gelöst. Bevorzugte und vorteilhafte Ausgestaltungen der Erfindung sind in den Unteransprüchen angegeben.

Danach zeichnet sich die erfindungsgemäße Lösung dadurch aus, daß bei einer opto-elektronischen Baugruppe mit einem ersten und einem zweiten optischen Abbildungssystem und einem monolitischen Multiplexkörper das erste und/oder das zweite optische Abbildungssystem in einen Schnittstellenkörper integriert und mindestens ein Schnittstellenkörper unmittelbar mit dem Multiplexkörper verbunden ist.

In Abhängigkeit davon, ob das optische Abbildungssystem Lichtstrahlen eines optischen Kanals mit Signalen verschiedener Wellenlängen oder Lichtstrahlen einer Mehrzahl optischer Kanäle mit jeweils nur einer Wellenlänge abbildet, handelt es sich dabei bei den Schnittstellenkörpern um einen einkanaligen Schnittstellenkörper oder einen mehrkanaligen Schnittstellenkörper. Naturgemäß sind sowohl ein einkanaliger Schnittstellenkörper und ein mehrkanaliger Schnittstellenkörper vorhanden.

Die Schnittstellenkörper werden bevorzugt als einstückige Formteile durch präzise Abformungsverfahren wie Spritzguß oder Prägen aus Materialien wie Kunststoff oder Glas hergestellt. Bevorzugt bestehen die Schnittstellenkörper aus Kunststoff, während der Multiplexkörper aus Glas oder einem glasartigen Material besteht. Die Ausbildung des Multiplexkörpers aus Glas weist den Vorteil auf, daß das in seiner einzelnen Wellenlänge zu separierende bzw. aus einzelnen Wellenlängen zusammenzuführende Licht in einem äußerst homogenen Medium geringer Dämpfung verläuft.

Die Ausbildung der Schnittstellenkörper aus Kunststoff weist den Vorteil auf, daß diese leicht herstellbar und insbesondere optische Abbildungselemente leicht in oder an diesen verwirklicht bzw. optische Abbildungselemente in diese integriert werden können.

Die Verbindung eines Schnittstellenkörpers mit dem Multiplexkörper erfolgt in einfacher Weise durch direktes Aufsetzen auf eine ebene Fläche des Multiplexkörpers. Bevorzugt werden beide Schnittstellenkörper unmittelbar auf den Multiplexkörper aufgesetzt, wobei die Schnittstellenkörper mit Vorteil an gegenüberliegenden, parallelen Oberflächen des Multiplexkörpers angeordnet sind.

In einer bevorzugten Ausgestaltung der Erfindung sind die optischen Abbildungssysteme der beiden Schnittstellenkörper derart ausgebildet, daß der optische Pfad durch den Multiplexkörper im wesentlichen parallel verläuft. Das Durchlaufen des Multiplexkörpers mit parallelem Licht weist den Vorteil auf, daß am Multiplexkörper angeordnete wellenselektive Spiegelschichten, also insbesondere Interferenzfilter, bei Durchstrahlung mit nahezu parallelem Licht besonders gute Eigenschaften aufweisen, d.h. mit hoher spektraler Auflösung jeweils nur eine bestimmte Wellenlänge hindurchlassen, während die anderen Wellenlängen reflektiert werden.

Die optischen Pfade durch die an dem Multiplexkörper angrenzenden Schnittstellenkörper verlaufen bevorzugt in einem spitzen Winkel zur Senkrechten der parallelen Flächen des Multiplexkörpers. Hierdurch wird gewährleistet, daß in den Multiplexkörper eingekoppeltes Licht in diesem mehrfach hin und her reflektiert wird, so daß das ein- oder ausgekoppelte Licht mehrere Interferenzfilter zur Separation bzw. Vereinigung der einzelnen Wellenlängen (Kanäle) durchlaufen kann.

Der Multiplexkörper weist bevorzugt zwei gegenüberliegende, parallele Oberflächen auf, wobei zumindest auf einer der Oberflächen als Interferenzfilter dienende wellenlängenselektive Spiegelflächen angeordnet sind, die jeweils einem optischen Pfad zugeordnet sind. Die wellenlängenselektiven Spiegelflächen können dabei unmittelbar auf die Oberfläche aufgebracht sein. Alternativ sind die wellenlängenselektiven Spiegelflächen auf separaten Trägerteilen realisiert, die auf der Oberfläche des Multiplexkörpers angeordnet sind.

Des weiteren weist der Multiplexkörper bevorzugt an mindestens einer Oberfläche nicht wellenlängenselektive Spiegelflächen auf. Damit wird ein unter einem Winkel zur Senkrechten in den Multiplexkörper eingekoppelter Lichtstrahl zwischen den beiden parallelen Oberflächen mehrfach hin und herreflektiert, wobei der Lichtstrahl an den wellenselektiven Spiegelflächen jeweils mit einem Wellenlängenanteil ausgekoppelt wird. Hierdurch erfolgt das eigentliche Multiplexing bzw. Demultiplexing der Signale verschiedener Wellenlängen. Die Schnittstellenkörper sorgen dagegen für die optische Ankopplung der jeweiligen optischen Pfade an weitere optische Elemente wie opto-elektronische Wandler oder Wellenleiter.

In den Schnittstellenkörpern sind je nachdem, ob nur ein Kanal oder eine Mehrzahl von Kanälen in den Multiplexkörper ein- bzw. ausgekoppelt werden, ein oder mehrere optische Abbildungselemente oder Gruppen von optischen Abbildungselementen (etwa Linse und Spiegel) vorgesehen. Die Abbildungselemente können auf verschiedene Weise in den Schnittstellenkörpern realisiert werden. Bevorzugt werden die optischen Abbildungselemente in den Schnittstellenkörpern durch gekrümmte, linsenförmige Oberflächen gebildet, die beispielsweise die Grenzflächen zu mindestens einem Hohlraum bilden, der im Schnittstellenkörper ausgebildet ist. Dies weist den Vorteil auf, daß nicht zusätzliche Linsen in den Schnittstellenkörper integriert werden müssen.

Alternativ werden die optischen Abbildungselemente in den Schnittstellenkörpern durch gekrümmte Spiegel gebildet, die insbesondere an Teilbereichen einer Außenfläche des Schnittstellenkörpers ausgebildet sind. Zur Ausbildung als reflektierende Spiegel sind die Außenflächen dabei bevorzugt mit einer Spiegelschicht versehen.

Es liegt ebenfalls im Rahmen der Erfindung, wenn die optischen Abbildungselemente in den Schnittstellenkörpern durch Linsen und/oder Spiegeloberflächen gebildet werden, die in die Schnittstellenkörper integriert sind.

In einer bevorzugten Weiterbildung der Erfindung sind an die opto-elektronische Baugruppe anzukoppelnde optische Elemente direkt optisch mit dem einkanaligen oder mehrkanaligen Schnittstellenkörper gekoppelt. Bevorzugt handelt es sich bei den anzukoppelnden optischen Elementen um opto-elektronische Wandler, wobei jedem opto-elektronischen Wandler ein optischer Pfad des mehrkanaligen Schnittstellenkörpers zugeordnet ist.

Die opto-elektronischen Wandler sind beispielsweise in einem Array-Chip angeordnet. Diese Anordnung ist insbesondere für den Fall von Vorteil, daß die opto-elektronischen Wandler als Empfänger dienen. Im Falle von Sendeelementen wird es in der Regel sinnvoll sein, separate Sendeelemente-Chips für die einzelnen Wellenlängen vorzusehen.

Die opto-elektronischen Wandler sorgen in an sich bekannter Weise für die Umwandlung von optischen in elektrische Signale bzw. für die Umwandlung von elektrischen in optische Signale.

Die Erfindung sieht vor, daß zumindest ein Schnittstellenkörper und die zugehörigen optischen Elemente durch eine optisch transparente Vergußmasse mindestens teilweise gemeinsam umhüllt sind. Hierdurch werden die opto-elektronische Baugruppe und die anzukoppelnden optischen Elemente gegenüber der Umgebung verkapselt und damit vor Feuchtigkeit, Schmutz etc. geschützt. Damit wird sichergestellt, daß der optische Pfad zwischen der opto-elektronischen Baugruppe und den anzukoppelnden optischen Elementen, der innerhalb der Vergußmasse verläuft, nicht beeinträchtigt wird.

Eine opto-elektronische Baugruppe, bei der zwei Schnittstellenkörper mit optischen Abbildungselementen direkt auf einen planparallelen, monolitischen Multiplexkörper aufgesetzt sind und der eine und/oder andere Schnittstellenkörper durch eine optisch transparente Vergußmasse zum Schutz des optischen Pfades mit anzukoppelnden optischen Elementen verbunden ist, stellt eine hochgradig kompakte, platzsparende, in der Herstellung einfache und gegenüber Umwelteinflüssen abgeschirmte Anordnung zur Verfügung.

Des weiteren wird darauf hingewiesen, daß die Ein- und Auskopplung von Licht in die opto-elektronische Baugruppe in der gleichen, aber auch in unterschiedlich zueinander angeordneten Ebenen erfolgen kann. Beispielsweise wird in einer bestimmten Richtung in die Baugruppe eingekoppeltes Licht in einem Winkel von 90° zur Einkopplungsrichtung ausgekoppelt.

In einer vorteilhaften Weiterbildung der Erfindung ist der einkanalige und/oder der mehrkanalige Schnittstellenkörper derart geformt, daß er Aufnahmen oder andere mechanische Montagemittel zur Ankopplung optischer Elemente ausbildet. Insbesondere bildet der Schnittstellenkörper eine Aufnahme für einen optischen Stecker aus, wodurch eine justagefreie Ausrichtung eines anzukoppelnden Lichtwellenleiters ermöglicht wird.

In einer alternativen Ausgestaltung der Erfindung sind die beiden Schnittstellenkörper auf einer Seite des Multiplexkörpers angeordnet. Die Ein- und Auskopplung von Licht erfolgt somit auf der gleichen Seite des Multiplexkörpers. Die beiden Schnittstellenkörper sind dabei nebeneinander angeordnet. In einer Weiterbildung dieser Erfindungsalternative sind die beiden Schnittstellenkörper zusätzlich einstückig ausgeführt, d.h. die jeweiligen optischen Abbildungssysteme der beiden Schnittstellenkörper sind in ein Teil integriert.

Die Erfindung wird nachfolgend unter der Bezugnahme auf die Figuren der Zeichnung anhand mehrerer Ausführungsbeispiele näher erläutert. Es zeigen:
- Fig. 1: - ein erstes Ausführungsbeispiel einer opto-elektronischen Baugruppe zum Multiplexen und/oder Demultiplexen optischer Signale, wobei optische Signale in der gleichen Ebene in die optoelektronische Baugruppe ein- und ausgekoppelt werden,
- Fig. 2: - ein zweites Ausführungsbeispiel einer opto-elektronischen Baugruppe, bei der die Ein- und Auskopplung von optischen Signalen in unterschiedlichen Ebenen erfolgt, und
- Fig. 3: einen Schnitt durch die opto-elektronische Baugruppe der Fig. 2 entlang der Linie A-A.

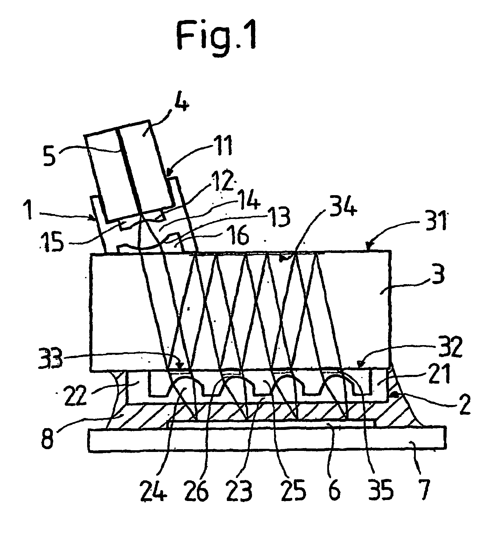

Fig. 1 zeigt eine opto-elektronische Baugruppe mit einem ersten Schnittstellenkörper 1, einem zweiten Schnittstellenkörper 2 und einem Multiplexkörper 3, der zwischen dem ersten und dem zweiten Schnittstellenkörper 1, 2 angeordnet ist.

Der Schnittstellenkörper 1 weist an seiner dem Multiplexkörper 3 abgewandten Seite eine Aufnahme 11 für einen Tragkörper 4 auf, in dem ein optischer Kanal bzw. optischer Pfad 5 ausgebildet ist, der durch einen Lichtwellenleiter gebildet wird.

Der erste Schnittstellenkörper 1 weist zwei gekrümmte Oberflächen 12, 13 auf, die zusammen eine Linse 14 ausbilden. Die Linsenoberflächen grenzen dabei jeweils an einen Hohlraum 15, 16 an, der sich zwischen der Linse 14 und dem Tragkörper 4 bzw. der Linse 14 und dem Multiplexkörper 3 ausbildet.

Die Linse 14 bewirkt, daß aus dem optischen Kanal bzw. Lichtwellenleiter 5 an der planen Stirnfläche 41 des Tragkörpers 4 austretendes, divergentes Licht zu einem parallelen Lichtstrahl abgebildet wird, der dann unter einem spitzen Winkel zur Senkrechten der angrenzenden Oberfläche 31 des Multiplexkörpers 3 in den Multiplexkörper 3 eingekoppelt wird.

Die erste Schnittstelle 1 besteht ebenso wie die zweite Schnittstelle 2 aus einem Kunststoff, insbesondere einem Polymermaterial wie beispielsweise Polycarbonat. Er wird beispielsweise im Spritzgußverfahren hergestellt.

Der Multiplexkörper 3 weist zwei planparallele Oberflächen 31, 32 auf und wird durch einen monolithischen Glaskörper gebildet. Der Multiplexkörper 3 weist an seiner Oberfläche 31 neben der Eintrittsfläche des parallelen Lichtstrahls eine Verspiegelung 34 auf, die bewirkt, daß Lichtstrahlen sämtlicher Wellenlängen vollständig reflektiert werden.

Die gegenüberliegende Oberfläche 32 des Multiplexkörpers 3 weist dagegen in regelmäßigen Abständen Interferenzfilter 33 auf, die für Licht einer bestimmten, jeweils unterschiedlichen Wellenlänge transparent sind, sämtliche anderen Wellenlängen jedoch reflektieren.

Dies führt dazu, daß über den Schnittstellenkörper 1 in den Multiplexkörper 3 eingekoppeltes Licht zwischen den beiden Flächen 31, 32 hin und her reflektiert wird, wobei an den Interferenzfiltern 33 jeweils ein Wellenlängenanteil ausgekoppelt wird. Aus dem Multiplexkörper 3 treten damit eine Vielzahl optischer Pfade bzw. Kanäle aus, die jeweils Lichtsignale einer bestimmten Wellenlänge aufweisen.

Aus dem Multiplexkörper 3 austretendes Licht wird unmittelbar in den zweiten Schnittstellenkörper 2 eingekoppelt. Dieser weist in der Schnittansicht der Fig. 1 zwei U-förmige Schenkel 21, 22 auf, zwischen denen sich eine Grundplatte 23 erstreckt. Zwischen Grundplatte 23, den seitlichen Schenkeln 21, 22 und der Oberfläche 32 des Multiplexkörpers 3 wird ein Hohlraum 25 gebildet. Auf der Grundplatte 23 erstrecken sich in Richtung des Multiplexkörpers 3 in regelmäßigen Abständen Materialausformungen mit gekrümmten, linsenförmigen Oberflächen 26, die jeweils eine Linse 24 ausbilden. Die einzelnen Linsen 24 sind dabei jeweils einem aus dem Multiplexkörper 3 austretenden optischen Kanal zugeordnet.

In einer alternativen Ausgestaltung sind die Interferenzfilter nicht direkt an der Oberfläche 32 des Multiplexkörpers 3, sondern auf separaten Trägerteilen 35 (in Fig. 1 schematisch gestrichelt dargestellt) realisiert, die an der Oberfläche 32 des Multiplexkörpers 3 angeordnet sind und in den Hohlraum 25 leicht hineinragen. Auf diese Weise sind die Interferenzfilter einfacher und kostengünstiger herzustellen.

Naturgemäß kann die beschriebene opto-elektronische Baugruppe sowohl auf der Sendeseite als auch auf der Empfangsseite einer Lichtübertragungsstrecke angordnet sein. Je nach Richtung der Lichtsignale wird Licht mehrerer Wellenlängen des optischen Kanals 5 in eine Vielzahl von optischen Kanälen mit jeweils nur einer Wellenlänge separiert, (d.h. das Licht durchläuft die Baugruppe in der Darstellung der Fig. 1 von oben nach unten und dient dabei als Demultiplexer bzw. Empfänger), oder Licht einer Vielzahl von Kanälen unterschiedlicher Wellenlänge wird durch den Multiplexkörper 3 zum optischen Kanal 5 hin vereinigt (d.h. das Licht durchläuft die Baugruppe der Fig. 1 von unten nach oben, wobei die Baugruppe als Multiplexer bzw. Sender dient).

Dem zweiten Schnittstellenkörper 2 ist ein Array-Chip mit einer Mehrzahl opto-elektronischer Wandler zugeordnet, wobei jeweils ein opto-elektronischer Wandler einem aus dem zweiten Schnittstellenkörper austretenden bzw. in diesen eintretenden optischen Kanal zugeordnet ist. Der Array-Chip 6 ist in an sich bekannter Weise auf einem Substrat 7 angeordnet. Bei den opto-elektronischen Wandlern handelt es sich beispielsweise um Leuchtdioden oder Halbleiterlaser, wobei vertikal nach oben austretendes Licht über den Schnittstellenkörper 2 in den Multiplexkörper 3 und weiter in den Schnittstellenkörper 4 und den optischen Kanal 5 geführt wird. Alternativ handelt es sich um Empfangselemente wie Fotodioden, die das Licht der einzelnen optischen Kanäle in elektrische Signale umsetzen.

Die opto-elektronischen Wandler sind alternativ nicht auf einem Array-Chip, sondern auf gesonderten Chips angeordnet.

Der Array-Chip 6, das Substrat 7 und der zweite Schnittstellenkörper 2 sind durch eine optische Vergußmasse 8 transparent versiegelt und dadurch gegen Umwelteinflüsse wie Feuchtigkeit und Staub geschützt. Der optische Pfad zwischen dem Array-Chip 6 und dem zweiten Schnittstellenkörper 2 verläuft dabei in der Vergußmasse 8. Hierdurch ist er optimal 5 gegenüber der Außenwelt abgeschirmt.

Sofern es sich bei den opto-elektronischen Wandlern um Sendeelemente wie Leuchtdioden oder Halbleiterlaser handelt, ist sicherzustellen, daß das von ihnen ausgestrahlte Licht winklig in den Multiplexkörper 3 eingekoppelt wird. Hierzu besteht etwa die Möglichkeit, die Linsen 24 des zweiten Schnittstellenkörpers 2 schräg bzw. winklig mit Licht zu beleuchten. Eine weitere Möglichkeit besteht darin, durch eine sägezahnartige Ausbildung der Unterseite der Bodenplatte 23 bzw. der Grenzfläche zwischen der Vergußmasse 8 und dem zweiten Schnittstellenkörper 2 Grenzflächen zu schaffen, von denen das Licht winklig in den Schnittstellenkörper 2 und auf die Linsen 24 gebrochen wird (nicht dargestellt). Die Vergußmasse 8 und der zweite Schnittstellenkörper 2 müßten für diesen Fall eine unterschiedliche Brechzahl aufweisen.

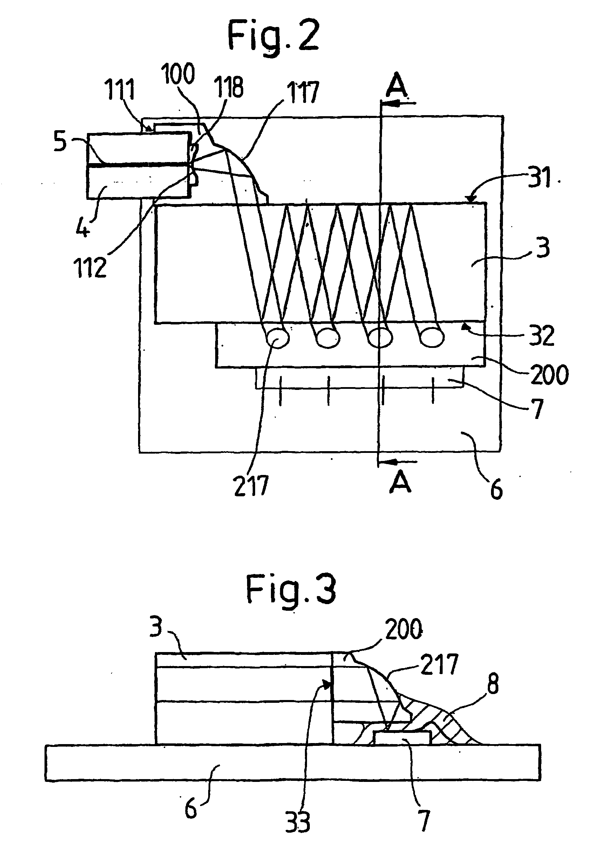

In den Fig. 2 und 3 ist ein alternatives Ausführungsbeispiel der erfindungsgemäßen opto-elektronischen Baugruppe dargestellt. Der grundsätzliche Aufbau mit einem Multiplexkörper 3 mit zwei planparallelen Oberflächen 31, 32, an denen jeweils unmittelbar ein erster Schnittstellenkörper 100 und ein zweiter Schnittstellenkörper 200 angekoppelt sind, entspricht dem Aufbau der Fig. 1. Der Unterschied des Ausführungsbeispiels der Fig. 2 gegenüber dem Ausführungsbeispiel der Fig. 1 besteht darin, daß die Auskopplung bzw. Einkopplung von Licht aus bzw. in den zweiten Schnittstellenkörper 200 in einer Ebene senkrecht zur Zeichenebene der Fig. 2 erfolgt und die optischen Abbildungselemente der Schnittstellenkörper 100, 200 gekrümmte Spiegel aufweisen.

Das erste Schnittstellenelement 100 weist wiederum eine Aufnahme 111 zur Ankopplung eines Tragkörpers 4 auf. Bei dem Tragkörper 4 handelt es sich beispielsweise um einen optischen Stecker.

Eine gewölbte Oberfläche 112 des Schnittstellenkörpers 100, die an einen Hohlraum 118 angrenzt, dient als Sammellinse, die den Divergenzgrad des austretenden Lichtes vermindert. Zusätzlich weist der Schnittstellenkörper 100 einen gekrümmten Spiegel 117 auf, der an einer Außenfläche des Schnittstellenkörpers 100 ausgebildet ist. Die Außenfläche ist dabei mit einer Spiegelschicht (nicht gesondert dargestellt) versehen, so daß ein in den Schnittstellenkörper 100 eindringender Lichtstrahl an dem gekrümmten Spiegel 117 reflektiert wird.

Die dargestellte Anordnung bewirkt, daß ein aus dem Lichtwellenleiter 5 des Tragkörpers austretender, divergenter Lichtstrahl an dem Spiegel 117 derart reflektiert wird, daß ein paralleler Lichtstrahl in den Multiplexkörper 3 einkoppelt wird.

Im Schnittstellenkörper 200 ist gemäß Fig. 3 eine optische Anordnung ähnlich der optischen Anordnung des Schnittstellenkörpers 100 ausgebildet. So wird aus dem Multiplexkörper 3 austretendes Licht über einen gekrümmten Spiegel 217, der an der Außenfläche des Schnittstellenkörpers 200 ausgebildet ist, nach unten in Richtung des opto-elektronischen Array-Chips 7 reflektiert. Die Spiegelfläche 217 konzentriert dabei aus dem Multiplexkörper 3 einfallendes Licht in Richtung des Array-Chips mit den opto-elektronischen Wandlern.

Der Array-Chip 7, das Substrat 6 und das zweite Schnittstellenelement 200 sind wiederum durch eine optisch transparente Vergußmasse 8 umhüllt, so daß der komplette optische Weg von der Umgebung abgeschirmt ist. Der Strahlengang zwischen Schnittstellenkörper 200 und Array-Chip 7 erfolgt innerhalb der Vergußmasse. Damit ist kein weiterer Schutz der Anordnung nach außen notwendig.

Die Erfindung beschränkt sich in ihrer Ausführung nicht auf die vorstehend dargestellten Ausführungsbeispiele. Wesentlich für die Erfindung ist allein, daß mindestens eines der beiden für die Ein- und Auskopplung von Licht in den Multiplexkörper verantwortlichen optischen Abbildungssysteme in einen Schnittstellenkörper integriert und dieser Schnittstellenkörper unmittelbar mit dem Multiplexkörper verbunden ist.

### Bezugszeichenliste

- 1, 100: erster Schnittstellenkörper
- 11, 111: Aufnahme
- 12, 13, 112: gewölbte Oberflächen
- 14: Linse
- 15, 16: Höhlräume
- 117: gekrümmter Spiegel
- 118: Hohlraum

- 2, 200: zweiter Schnittstellenkörper
- 21, 22: U-förmige Schenkel
- 23: Grundplatte
- 24: Linse
- 25: Hohlraum
- 26: gewölbte Oberfläche
- 217: gekrümmter Spiegel

- 3: Multiplexkörper
- 31, 32: Oberflächen des Multiplexkörpers
- 33: Interferenzfilter
- 34: Verspiegelung
- 35: Trägerteil für Interferenzfilter

- 4: Tragkörper
- 5: optischer Kanal
- 6: Substrat
- 7: Array-Chip mit opto-elektronischen Wandlern
- 8: Optischer Verguß

## Patentansprüche

1. Opto-elektronische Baugruppe zum Multiplexen und/oder Demultiplexen optischer Signale mit:
- einem monolithischen Multiplexkörper (3) zum Multiplexen bzw. Demultiplexen optischer Signale,
- einem ersten optischen Abbildungssystem (1, 100), das Lichtstrahlen eines optischen Kanals mit einer Vielzahl von Wellenlängen in den Multiplexkörper (3) ein- bzw. auskoppelt, und
- einem zweiten optischen Abbildungssystem (2, 200), das Lichtstrahlen einer Mehrzahl optischer Kanäle jeweils einer Wellenlänge in den Multiplexkörper (3) ein- bzw. auskoppelt, wobei
- das erste optische Abbildungssystem in einen einkanaligen Schnittstellenkörper (1, 100) und/oder das zweite optische Abbildungssystem in einen mehrkanaligen Schnittstellenkörper (2, 200) integriert und mindestens ein Schnittstellenkörper (1, 100; 2, 200) unmittelbar mit dem Multiplexkörper (3) verbunden ist,
wobei
der opto-elektronischen Baugruppe mindestens ein anzukoppelndes opto-elektronisches Element (6) zugeordnet ist, das direkt optisch mit einem der Schnittstellenkörper (2, 200) gekoppelt ist, **dadurch gekennzeichnet, dass** der Schnittstellenkörper (2, 200) und das anzukoppelnde opto-elektronische Element (6) durch eine optisch transparente Vergußmasse (8) mindestens teilweise gemeinsam umhüllt sind und der optische Pfad zwischen dem Schnittstellenkörper (2, 100) und dem anzukoppelnden opto-elektronischen Element (6) in der Vergußmasse (8) verläuft.

2. Opto-elektronische Baugruppe nach Anspruch 1,
**dadurch gekennzeichnet, daß** das beide Schnittstellenkörper (1, 100; 2, 200) als einstückige Formteile ausgebildet sind.

3. Opto-elektronische Baugruppe nach Anspruch 2,
**dadurch gekennzeichnet, daß** die Schnittstellenkörper (1, 100; 2, 200) an gegenüberliegenden, parallelen Oberflächen (31, 32) des Multiplexkörpers (3) angeordnet sind.

4. Opto-elektronische Baugruppe nach Anspruch 2 oder 3,
**dadurch gekennzeichnet, daß** die optischen Abbildungssysteme der beiden Schnittstellenkörper (1, 100; 2, 200) derart ausgebildet sind, daß der optische Pfad durch den Multiplexkörper (3) im wesentlichen parallel erfolgt.

5. Opto-elektronische Baugruppe nach Anspruch 3 und 4,
**dadurch gekennzeichnet, daß** die optischen Pfade durch die beiden Schnittstellenkörper (1, 100; 2, 200) in einem spitzen Winkel zur Senkrechten der parallelen Flächen (31, 32) des Multiplexkörpers (3) erfolgen.

6. Opto-elektronische Baugruppe nach mindestens einem der vorangehenden Ansprüche,
**dadurch gekennzeichnet, daß** der Multiplexkörper (3) zwei gegenüberliegende, parallele Oberflächen (31, 32) aufweist, wobei zumindest auf einer der Oberflächen (32) wellenlängenselektive Spiegelflächen (33, 35) angeordnet sind, die jeweils einem optischen Pfad zugeordnet sind.

7. Opto-elektronische Baugruppe nach Anspruch 6,
**dadurch gekennzeichnet, daß** die Spiegelflächen auf separaten Trägerteilen (35) realisiert sind, die an der Oberfläche (32) des Multiplexkörpers (3) angeordnet sind.

8. Opto-elektronische Baugruppe nach Anspruch 6 oder 7,
**dadurch gekennzeichnet, daß** der Multiplexkörper (3) an mindestens einer Oberfläche (31) nicht wellenlängenselektive Spiegelflächen (34) aufweist.

9. Opto-elektronische Baugruppe nach mindestens einem der Ansprüche 6 bis 8, **dadurch**
**gekennzeichnet, daß** ein paralleler, über den einkanaligen Schnittstellenkörper (1, 100) unter einem spitzen Winkel in den Multiplexkörper (3) eintretender Lichtstrahl zwischen den beiden parallelen Oberflächen (31, 32) mehrfach hin und her reflektiert wird, wobei der Lichtstrahl an den wellenlängenselektiven Spiegelflächen (33) jeweils mit einem Wellenlängenanteil ausgekoppelt wird.

10. Opto-elektronische Baugruppe nach mindestens einem der vorangehenden Ansprüche,
**dadurch gekennzeichnet, daß** das optische Abbildungssystem des mehrkanaligen Schnittstellenkörpers (2, 200) eine Mehrzahl von optischen Abbildungselementen (24, 217) oder Mehrzahl von Gruppen von optischen Abbildungselementen aufweist, wobei jeweils ein Abbildungselement (24, 217) oder eine Gruppe von Abbildungselementen einem optischen Kanal des mehrkanaligen Schnittstellenkörpers (2, 200) mit Lichtsignalen einer Wellenlänge zugeordnet ist.

11. Opto-elektronische Baugruppe nach mindestens einem der vorangehenden Ansprüche,
**dadurch gekennzeichnet, daß** das optische Abbildungssystem des einkanaligen Schnittstellenkörpers (1, 100) mindestens ein optisches Abbildungselement (14, 117) aufweist, das einem optischen Kanal (5) mit Lichtsignalen verschiedener Wellenlängen zugeordnet ist.

12. Opto-elektronische Baugruppe nach Anspruch 10 oder 11,
**dadurch gekennzeichnet, daß** die optischen Abbildungselemente (14, 24) in den Schnittstellenkörpern durch gekrümmte, linsenförmige Oberflächen (12, 13, 26) gebildet werden.

13. Opto-elektronische Baugruppe nach Anspruch 12,
**dadurch gekennzeichnet, daß** die linsenförmigen Oberflächen (12, 13, 26) die Grenzflächen zu mindestens einem Hohlraum (15, 16, 25) bilden, der im Schnittstellenkörper (1, 2) ausgebildet ist.

14. Opto-elektronische Baugruppe nach Anspruch 13,
**dadurch gekennzeichnet, daß** der mehrkanalige Schnittstellenkörper (2) ein im Schnitt U-förmiges Rahmenteil (21, 22, 23) aufweist, das an seinen Schenkeln (21, 22) mit der Oberfläche (32) des Multiplexkörpers (3) verbunden ist, wobei zwischen den Schenkeln (21, 22) des U-förmigen Rahmenteils (21, 22, 23) und der Oberfläche (32) des Multiplexkörpers (3) ein Hohlraum (25) entsteht und in diesem Hohlraum in regelmäßigen Abständen gekrümmte, linsenförmige Oberflächen (26) des Schnittstellenkörpers (2) ausgebildet sind.

15. Opto-elektronische Baugruppe nach Anspruch 10 oder 11, **dadurch gekennzeichnet, daß** die optischen Abbildungselemente in den Schnittstellenkörpern (100, 200) durch gekrümmte Spiegel (117, 217) gebildet werden.

16. Opto-elektronische Baugruppe nach Anspruch 15,
**dadurch gekennzeichnet, daß** die gekrümmten Spiegel (117, 217) an Teilbereichen einer Außenfläche des Schnittstellenkörpers (100, 200) ausgebildet sind.

17. Opto-elektronische Baugruppe nach Anspruch 10 oder 11,
**dadurch gekennzeichnet, daß** die optischen Abbildungselemente in den Schnittstellenkörpern Linsen und/oder Spiegeloberflächen enthalten.

18. Opto-elektronische Baugruppe nach mindestens einem der vorangehenden Ansprüche,
**dadurch gekennzeichnet, daß** der Multiplexkörper (3) vollständig aus Glas oder einem glasartigen Material besteht.

19. Opto-elektronische Baugruppe nach mindestens einem der vorangehenden Ansprüche,
**dadurch gekennzeichnet, daß** der mehrkanalige und/oder der einkanalige Schnittstellenkörper (1, 100; 2, 200) aus einem Kunststoff bestehen.

20. Opto-elektronische Baugruppe nach mindestens einem der vorangehenden Ansprüche, **dadurch**
**gekennzeichnet, daß** die anzukoppelnden opto-elektronischen Elemente opto-elektronische Wandler sind,
wobei jedem opto-elektronischen Wandler ein optischer Pfad des mehrkanaligen Schnittstellenkörpers (2, 200) zugeordnet ist.

21. Opto-elektronische Baugruppe nach Anspruch 20,
**dadurch gekennzeichnet, daß**
die opto-elektronischen Wandler in einem Array-Chip (6) angeordnet sind.

22. Opto-elektronische Baugruppe nach mindestens einem der vorangehenden Ansprüche,
**dadurch gekennzeichnet, daß** die Ein- und Auskopplung von Licht in die opto-elektronische Baugruppe in der gleichen Ebene erfolgt.

23. Opto-elektronische Baugruppe nach mindestens einem der vorangehenden Ansprüche,
**dadurch gekennzeichnet, daß** die Ein- und Auskopplung von Licht in die opto-elektronische Baugruppe in unterschiedlichen, insbesondere in unter einem Winkel von 90° zueinander angeordneten Ebenen erfolgt.

24. Opto-elektronische Baugruppe nach mindestens einem der vorangehenden Ansprüche,
**dadurch gekennzeichnet, daß** der einkanalige und/oder mehrkanalige Schnittstellenkörper (1, 100; 2, 200) derart geformt ist, daß er Aufnahmen (11, 111) oder andere mechanische Montagemittel zur Ankopplung optischer Elemente (4) ausbildet.

25. Opto-elektronische Baugruppe nach Anspruch 24,
**dadurch gekennzeichnet, daß** der Schnittstellenkörper eine Aufnahme (11, 111) für einen optischen Stecker (4) ausbildet.

26. Opto-elektronische Baugruppe nach mindestens einem der vorangehenden Ansprüche,
**dadurch gekennzeichnet, daß** die beiden Schnittstellenkörper auf einer Seite (31, 32) des Multiplexkörpers (3) angeordnet sind.

27. Opto-elektronische Baugruppe nach Anspruch 26,
**dadurch gekennzeichnet, daß** die beiden Schnittstellenkörper einstückig ausgebildet sind.

## Claims

1. Optoelectronic assembly for multiplexing and/or demultiplexing optical signals, having:
- a monolithic multiplexing member (3) for multiplexing and/or demultiplexing optical signals,
- a first optical imaging system (1, 100) that couples light beams of an optical channel having a multiplicity of wavelengths into and out of the multiplexing member (3), and
- a second optical imaging system (2, 200), that couples light beams of a plurality of optical channels of one wavelength in each case into and out of the multiplexing member (3), wherein
- the first optical imaging system is integrated into a single-channel interface member (1, 100) and/or the second optical imaging system is integrated into a multichannel interface member (2, 200), and at least one interface member (1, 100; 2, 200) is connected directly to the multiplexing member (3),
the optoelectronic assembly being assigned at least one optoelectronic element (6) which is to be coupled and which is optically coupled directly to one of the interface members (2, 200), **characterized in that** the interface member (2, 200) and the optoelectronic element (6) which is to be coupled are at least partially jointly sheathed by an optically transparent sealing compound (8) and the optical path between the interface member (2, 100) and the optoelectronic element (6) which is to be coupled runs in the sealing compound (8).

2. Optoelectronic assembly according to Claim 1, **characterized in that** the two interface members (1, 100; 2, 200) are designed as unipartite shaped pieces.

3. Optoelectronic assembly according to Claim 2, **characterized in that** the interface members (1, 100; 2, 200) are arranged on opposite, parallel surfaces (31, 32) of the multiplexing member (3).

4. Optoelectronic assembly according to Claim 2 or 3, **characterized in that** the optical imaging systems of the two interface members (1, 100; 2, 200) are designed in such a way that the optical path through the multiplexing member (3) occurs in a substantially parallel fashion.

5. Optoelectronic assembly according to Claims 3 and 4, **characterized in that** the optical paths through two interface members (1, 100; 2, 200) occur at an acute angle to the perpendicular to the parallel faces (31, 32) of the multiplexing member (3).

6. Optoelectronic assembly according to at least one of the preceding claims, **characterized in that** the multiplexing member (3) has two opposite, parallel surfaces (31, 32), there being arranged at least on one of the surfaces (32), wavelength-selective reflective surfaces (33, 35) which are respectively assigned to an optical path.

7. Optoelectronic assembly according to Claim 6, **characterized in that** the reflective surfaces are implemented on separate carrier parts (35) that are arranged on the surface (32) of the multiplexing member (3).

8. Optoelectronic assembly according to Claim 6 or 7, **characterized in that** the multiplexing member (3) has on at least one surface (31) reflective surfaces (34) that are not wavelength selective.

9. Optoelectronic assembly according to at least one of Claims 6 to 8, **characterized in that** a parallel light beam entering the multiplexing member (3) via the single-channel interface member (1, 100) at an acute angle is reflected to and fro multiply between the two parallel surfaces (31, 32), the light beam being respectively coupled out with a wavelength component at the wavelength-selective reflective surfaces (33).

10. Optoelectronic assembly according to at least one of the preceding claims, **characterized in that** the optical imaging system of the multichannel interface member (2, 200) has a plurality of optical imaging elements (24, 217) or a plurality of groups of optical imaging elements, in each case one imaging element (24, 217) or a group of imaging elements being assigned to an optical channel of the multichannel interface member (2, 200) with light signals of one wavelength.

11. Optoelectronic assembly according to at least one of the preceding claims, **characterized in that** the optical imaging system of the single-channel interface member (1, 100) has at least one optical imaging element (14, 117) which is assigned to an optical channel (5) with light signals of different wavelengths.

12. Optoelectronic assembly according to Claim 10 or 11, **characterized in that** the optical imaging elements (14, 24) are formed in the interface members by curved, lenticular surfaces (12, 13, 26).

13. Optoelectronic assembly according to Claim 12, **characterized in that** the lenticular surfaces (12, 13, 26) form the boundary surfaces with at least one cavity (15, 16, 25) which is constructed in the interface body (1, 2).

14. Optoelectronic assembly according to Claim 13, **characterized in that** the multichannel interface member (2) has a frame part (21, 22, 23) of U-shaped section, which is connected at its limbs (21, 22) to the surface (32) of the multiplexing member (3), a cavity (25) being produced between the limbs (21, 22) of the U-shaped frame part (21, 22, 23) and the surface (32) of the multiplexing member (3), and curved, lenticular surfaces (26) of the interface member (2) being constructed at regular spacings in this cavity.

15. Optoelectronic assembly according to Claim 10 or 11, **characterized in that** the optical imaging elements are formed in the interface members (100, 200) by curved mirrors (117, 217).

16. Optoelectronic assembly according to Claim 15, **characterized in that** the curved mirrors (117, 217) are constructed on subregions of an outer surface of the interface member (100, 200).

17. Optoelectronic assembly according to Claim 10 or 11, **characterized in that** the optical imaging elements in the interface members include lenses and/or reflective surfaces.

18. Optoelectronic assembly according to at least one of the preceding claims, **characterized in that** the multiplexing member (3) consists entirely of glass or a vitreous material.

19. Optoelectronic assembly according to at least one of the preceding claims, **characterized in that** the multichannel and/or the single-channel interface member (1, 100; 2, 200) consist of a plastic.

20. Optoelectronic assembly according to at least one of the preceding claims, **characterized in that** the optoelectronic elements to be coupled are optoelectronic transducers, each optoelectronic transducer being assigned an optical path of the multichannel interface member (2, 200).

21. Optoelectronic assembly according to Claim 20, **characterized in that** the optoelectronic transducers are arranged in an array chip (6).

22. Optoelectronic assembly according to at least one of the preceding claims, **characterized in that** light is coupled into and out of the optoelectronic assembly in the same plane.

23. Optoelectronic assembly according to at least one of the preceding claims, **characterized in that** light is coupled into and out of the optoelectronic assembly in different planes arranged, in particular, at an angle of 90° to one another.

24. Optoelectronic assembly according to at least one of the preceding claims, **characterized in that** the single-channel and/or multichannel interface member (1, 100; 2, 200) is formed in such a way that it fashions receptacles (11, 111) or other mechanical mounting means for coupling optical elements (4).

25. Optoelectronic assembly according to Claim 24, **characterized in that** the interface member fashions a receptacle (11, 111) for an optical plug (4).

26. Optoelectronic assembly according to at least one of the preceding claims, **characterized in that** the two interface members are arranged on one side (31, 32) of the multiplexing member (3).

27. Optoelectronic assembly according to Claim 26, **characterized in that** the two interface members are designed in unipartite fashion.

## Revendications

1. Bloc opto-électronique de multiplexage et/ou de démultiplexage de signaux optiques comprenant :
- un corps (3) monolithique de multiplexage ou de démultiplexage de signaux optiques,
- un premier système (1, 100) de reproduction optique qui fait entrer dans le corps (3) de multiplexage et en fait sortir des faisceaux lumineux d'un canal optique ayant une pluralité de longueurs d'ondes, et
- un deuxième système (2, 200) de reproduction optique qui fait entrer dans le corps (3) de multiplexage et en fait sortir des faisceaux lumineux d'une multiplicité de canaux optiques, respectivement d'une longueur d'onde,
dans lequel
- le premier système de reproduction optique fait partie intégrante d'un corps (1, 100) d'interface à un seul canal et/ou le deuxième système de reproduction optique fait partie intégrante d'un corps (2, 200) d'interface à canaux multiples et au moins un corps (1, 100 ; 2, 200) d'interface est relié directement au corps (3) de multiplexage,
dans lequel
il est associé au bloc opto-électronique au moins un élément (6) opto-électronique à coupler, qui est couplé directement du point de vue optique à l'un des corps (2, 200) d'interface, **caractérisé en ce que** le corps (2, 200) d'interface et l'élément (6) opto-électronique à coupler sont enrobés conjointement au moins en partie par une masse (8) de scellement transparente du point de vue optique et le trajet optique entre le corps (2, 100) d'interface et l'élément (6) opto-électronique à coupler s'étend dans la masse (8) de scellement.

2. Bloc opto-électronique suivant la revendication 1, **caractérisé en ce que** les deux corps (1, 100 ; 2, 200) d'interface sont constitués sous la forme de pièces moulées d'un seul tenant.

3. Bloc opto-électronique suivant la revendication 2, **caractérisé en ce que** les deux corps (1, 100 ; 2, 200) d'interface sont constitués sur des surfaces (31, 32) parallèles opposées du corps (3) de multiplexage.

4. Bloc opto-électronique suivant la revendication 2 ou 3, **caractérisé en ce que** les systèmes de reproduction optiques des deux corps (1, 100 ; 2, 200) d'interface sont constitués de façon à ce que le trajet optique s'effectue de manière sensiblement parallèle dans le corps (3) de multiplexage.

5. Bloc opto-électronique suivant les revendications 3 et 4, **caractérisé en ce que** les trajets optiques dans les deux corps (1, 100 ; 2, 200) d'interface s'effectuent en faisant un angle aigu par rapport aux perpendiculaires aux surfaces (31, 32) parallèles du corps (3) de multiplexage.

6. Bloc opto-électronique suivant au moins l'une des revendications précédentes, **caractérisé en ce que** le corps (3) de multiplexage a deux surfaces (31, 32) parallèles opposées, des surfaces (33, 35) formant miroirs sélectives en longueur d'onde étant disposées au moins sur l'une des surfaces (32), et étant associées respectivement à un trajet optique.

7. Bloc opto-électronique suivant la revendication 6, **caractérisé en ce que** les surfaces formant miroirs sont réalisées sur des pièces (35) de support distinctes, qui sont disposées sur la surface (32) du corps (3) de multiplexage.

8. Bloc opto-électronique suivant la revendication 6 ou 7, **caractérisé en ce que** le corps (3) de multiplexage a, sur au moins une surface (31), des surfaces (34) formant miroirs qui ne sont pas sélectives en longueur d'onde.

9. Bloc opto-électronique suivant au moins l'une des revendications 6 à 8, **caractérisé en ce qu'**un faisceau de lumière parallèle et entrant par le corps (1, 100) d'interface à un seul canal en faisant un angle aigu dans le corps (3) de multiplexage est réfléchi plusieurs fois en aller et retour entre les deux surfaces (31, 32) parallèles, le faisceau lumineux sortant sur les surfaces (33) formant miroirs sélectives en longueur d'onde en ayant respectivement une composante de longueur d'onde.

10. Bloc opto-électronique suivant au moins l'une des revendications précédente, **caractérisé en ce que** le système de reproduction optique du corps (2, 200) d'interface à canaux multiples a une multiplicité d'éléments (24, 217) de reproduction optiques ou une multiplicité de groupes d'éléments de reproduction optiques, un élément (24, 217) de reproduction ou un groupe d'éléments de reproduction étant associé respectivement à un canal optique du corps (2, 200) d'interface à canaux multiples ayant des signaux lumineux d'une longueur d'onde.

11. Bloc opto-électronique suivant au moins l'une des revendications précédentes, **caractérisé en ce que** le système de reproduction optique du corps (1, 100) d'interface à un seul canal a au moins un élément (14, 117) de reproduction optique qui est associé à un canal (5) optique ayant des signaux lumineux de longueurs d'ondes diverses.

12. Bloc opto-électronique suivant la revendication 10 ou 11, **caractérisé en ce que** les éléments (14, 24) de reproduction optiques sont formés dans les corps d'interface par des surfaces (12, 13, 26) courbes en forme de lentilles.

13. Bloc opto-électronique suivant la revendication 12, **caractérisé en ce que** les surfaces (12, 13, 26) en forme de lentilles forment les interfaces avant d'au moins une cavité (15, 16, 25) qui est constituée dans le corps (1, 2) d'interface.

14. Bloc opto-électronique suivant la revendication 13, **caractérisé en ce que** le corps (2) d'interface à canaux multiples a une partie (21, 22, 23) formant cadre ayant en coupe une forme en U et qui est reliée par ses branches (21, 22) à la surface (32) du corps (3) de multiplexage, avec création entre les branches (21, 22) de la partie (21, 22, 23) de cadre en forme de U et la surface (32) du corps (3) de multiplexage d'une cavité (25) et formation dans cette cavité, à intervalles réguliers, de surfaces (26) courbes en forme de lentilles du corps (2) d'interface.

15. Bloc opto-électronique suivant la revendication 10 ou 11, **caractérisé en ce que** les éléments de reproduction optiques sont formés dans les corps (100, 200) d'interface par des miroirs (117, 217) courbes.

16. Bloc opta-électronique suivant la revendication 15, **caractérisé en ce que** les miroirs (117, 217) courbes sont constitués sur des zones partielles d'une surface extérieure du corps (100, 200) d'interface.

17. Bloc opto-électronique suivant la revendication 10 ou 11, **caractérisé en ce que** les éléments de reproduction optiques contiennent dans les corps d'interface des lentilles et/ou des surfaces de miroirs.

18. Bloc opto-électronique suivant au moins l'une des revendications précédentes, **caractérisé en ce que** le corps (3) de multiplexage est entièrement en verre ou en une matière vitreuse.

19. Bloc opto-électronique suivant au moins l'une des revendications précédentes, **caractérisé en ce que** le corps (1, 100 ; 2, 200) d'interface à canaux multiples et/ou à un seul canal est en matière plastique.

20. Bloc opto-électronique suivant au moins l'une des revendications précédentes, **caractérisé en ce que** les éléments opto-électroniques à coupler sont des transducteurs opto-électroniques, un trajet optique du corps (2, 200) d'interface à canaux multiples étant associé à chaque transducteur opto-électronique.

21. Bloc opto-électronique suivant la revendication 20, **caractérisé en ce que** les transducteurs opto-électroniques sont disposés dans une puce (6) de réseau.

22. Bloc opto-électronique suivant au moins l'une des revendications précédentes, **caractérisé en ce que** l'entrée et la sortie de la lumière dans le bloc opto-électronique s'effectuent dans le même plan.

23. Bloc opto-électronique suivant au moins l'une des revendications précédentes, **caractérisé en ce que** l'entrée et la sortie de la lumière dans le bloc opto-électronique s'effectuent dans des plans différents, faisant notamment entre eux un angle de 90°.

24. Bloc opto-électronique suivant au moins l'une des revendications précédentes; **caractérisé en ce que** le corps (1, 100 ; 2, 200) d'interface à un seul canal et/ou à canal multiple est conformé de façon à constituer des logements (11, 111) ou d'autres moyens de montage mécaniques pour le couplage d'éléments (4) optiques.

25. Bloc opto-électronique suivant la revendication 24, **caractérisé en ce que** le corps d'interface constitue un logement (11, 111) pour un connecteur (4) optique.

26. Bloc opto-électronique suivant au moins l'une des revendications précédentes, **caractérisé en ce que** les deux corps d'interface sont disposés d'un côté (31, 32) du corps (3) de multiplexage.

27. Bloc opto-électronique suivant la revendication 26, **caractérisé en ce que** les deux corps d'interface sont constitués d'un seul tenant.
